# EUROPÄISCHE PATENTSCHRIFT

(11) **EP 3 811 046 B1**
(45) Veröffentlichungstag und Bekanntmachung des Hinweises auf die Patenterteilung: **07.08.2024**
(21) Anmeldenummer: 19732617.6
(22) Anmeldetag: 19.06.2019
(51) Int. Cl.: G01L 3/10, G01L 9/16

(54) **BELASTUNGSMESSANORDNUNG, HERSTELLVERFAHREN HIERFÜR UND DAMIT DURCHFÜHRBARES BELASTUNGSMESSVERFAHREN**
LOAD MEASURING ARRANGEMENT, METHOD FOR PRODUCING SAID ARRANGEMENT AND LOAD MEASURING METHOD WHICH CAN BE CARRIED OUT WITH SAID ARRANGEMENT
ENSEMBLE DE MESURE DE CHARGE, PROCÉDÉ DE FABRICATION POUR CELUI-CI ET PROCÉDÉ DE MESURE DE CHARGE POUVANT ÊTRE RÉALISÉ AVEC CELUI-CI

(30) Priorität: 21.06.2018 DE 102018115008; 15.05.2019 DE 102019112795
(43) Veröffentlichungstag der Anmeldung: 28.04.2021
(73) Patentinhaber: Trafag AG, 8706 Bubikon (CH)
(72) Erfinder: ETTENAUER, Tobias, 70190 Stuttgart (DE)
(74) Vertreter: KASTEL Patentanwälte PartG mbB
(86) Internationale Anmeldenummer: PCT/EP2019/066265
(87) Internationale Veröffentlichungsnummer: WO 2019/243448

(56) Entgegenhaltungen:
- EP-A1- 3 051 265
- DE-A1- 3 604 088
- US-A1- 2009 249 893

## Beschreibung

Die Erfindung betrifft eine Belastungsmessanordnung umfassend ein Testobjekt und eine Belastungsmessvorrichtung zur Messung einer Belastung an dem Testobjekt, wobei die Belastungsmessvorrichtung eine Magnetfelderzeugungseinrichtung zum Erzeugen eines Magnetfelds an einem Messbereich des Testobjekts und eine erste und eine zweite Magnetfelderfassungseinrichtung zum Erfassen eines sich aufgrund der Belastung ändernden Magnetfeldparameters aufweist. Weiter betrifft die Erfindung ein Herstellverfahren für eine solche Belastungsmessanordnung sowie ein damit durchführbares Belastungsmessverfahren.

Die Erfindung betrifft insbesondere ein Verfahren und eine Anordnung zum Messen einer mechanischen Belastung an einem Testobjekt. Unter Belastungen werden dabei Kräfte, Drehmomente oder mechanische Spannungen an dem Testobjekt verstanden.

Einige Ausführungsbeispiele der Erfindung betreffen insbesondere eine Drehmomentmessanordnung mit einem Drehmomentmessgeber für einen Drehmomentsensor zum Messen eines Drehmoments an einem Testobjekt in Form einer Welle unter Erfassung von Magnetfeldänderungen. Außerdem betreffen Ausgestaltungen der Erfindung ein Messverfahren zum Messen eines Drehmoments durch Erfassung von Magnetfeldänderungen. Insbesondere sind der Drehmomentmessgeber, der Drehmomentsensor und das Messverfahren zur Erfassung von Magnetfeldänderungen aufgrund des Villari-Effektes, und mehr insbesondere zur magnetoelastischen (=invers magnetorestriktiven) Erfassung von Drehmomenten ausgebildet.

Derartige Drehmomentsensoren, die Drehmomente in Testobjekten wie insbesondere Wellen, aufgrund von Magnetfeldänderungen erfassen, sowie die wissenschaftlichen Grundlagen hierfür sind in den folgenden Literaturstellen beschrieben:

| | |
|---|---|
| D1 | Gerhard Hinz und Heinz Voigt "Magnoelastic Sensors" in "Sensors", VCH Verlagsgesellschaft mbH, 1989, Seiten 97-152 |
| D2 | US 3 311 818 |
| D3 | EP 0 384 042 A2 |
| D4 | DE 30 31 997 A |
| D5 | US 3 011 340 A |
| D6 | US 4 135 391 A |

Insbesondere eine Bauart von Drehmomentmessgebern, wie sie in der D4 (DE 30 31 997 A1) beschrieben ist, hat sich als besonders wirkungsvoll für die Messung von Drehmomenten in Wellen und anderen Messstellen herausgestellt.

Andere Ausführungsbeispiele betreffen einen Drucksensor mit einer Membran als Testobjekt und einer Spannungserfassungseinrichtung zum Erfassen einer mechanischen Spannung in der Membran durch aktive Aufmagnetisierung.

Es ist bekannt, dass mit magnetischen Messverfahren die physikalischen Messgrößen Drehmoment, Kraft und Position an ferromagnetischen Objekten ermittelt werden können. Zur Anwendung kommen dabei meist magnetoelastische (oder auch invers-magnetostriktive) Sensoren oder Wirbelstrom- oder Eddy-Current-Sensoren. Die benutzten ferromagnetischen Materialien ändern ihre Permeabilität unter dem Einfluss von Zug- oder Druckspannungen (auch Villari-Effekt genannt). Eine Abgrenzung der einzelnen Effekte ist in der Praxis meist schwierig, einzig der Wirbelstromsensor ist über seine Frequenzabhängigkeit leichter von den übrigen Effekten zu unterscheiden. Zudem ist der Zustand der Magnetisierung des Objektes oft nicht bekannt oder wird durch Verarbeitung und Handling der Objekte nachhaltig beeinflusst, so dass ein breiter industrieller Einsatz oft schwierig ist. Zudem ist eine Vorhersage der Lebensdauer der magnetisierten Objekte unter den oft recht harten Umgebungsbedingungen, in denen die Technologie Einsatz findet (beispielsweise aber nicht ausschließlich Elektromobilität, wie insbesondere E-Bikes, z.B. Pedelecs, Schwerindustrie, Getriebe, hydraulische Systeme in Baumaschine oder in der Landtechnik und vieles mehr) oft nicht möglich.

Aus der

| | |
|---|---|
| D7 | EP 3'051'265 A1 |

ist es bekannt, diesen Nachteil durch eine aktive Aufmagnetisierung mittels eines magnetischen Wechselfeldes im kHz Bereich zu kompensieren. Hierfür werden Generator- und Detektorspulen, nämlich zwei erste Magnetfelderfassungsspulen A1, A2 und zwei zweite Magnetfelderfassungsspulen B1, B2 und eine mittige Generatorspule Lg in einer Kreuzanordnung (X-Anordnung) verwendet. Dabei wird die Differenz des Spulenpaares A-B = (A1+A2) - (B1+B2) in einem analogen Signalverarbeitungsschema ermittelt.

Die

| | |
|---|---|
| D8 | US 2009/0249893 A1 |

offenbart eine Messeinrichtung, bei der eine Schicht aus einer magnetoelastischen Legierung auf einem lasttragenden Element angeordnet ist. Die Korngröße der Schicht liegt zwischen 100nm und 10000 nm. Insbesondere offenbart D8 eine Belastungsmessanordnung umfassend ein Testobjekt und eine Belastungsmessvorrichtung zur Messung einer Belastung an dem Testobjekt, wobei die Belastungsmessvorrichtung eine Magnetfelderzeugungseinrichtung zum Erzeugen eines Magnetfelds an einem Messbereich (11) des Testobjekts (14) und eine Magnetfelderfassungseinrichtung zum Erfassen eines sich aufgrund der Belastung ändernden Magnetfeldparameters aufweist, wobei der Messbereich eine Schicht aus einem ferromagnetischen amorphen oder nanokristallinen Metall mit maximaler Korngröße kleiner 1 µm aufweist, wobei das Testobjekt einen Körper enthält, der aus dem nicht-ferromagnetischen Material Stahl gebildet ist, und zumindest an dem Messbereich eine Beschichtung aus dem ferromagnetischen amorphen oder nanokristallinen Metall in Form einer galvanischen Fe-Ni-Legierung aufweist, die zur Kristallisierung wärmebehandelt ist.

Die

| | |
|---|---|
| D9 | DE 3604088 A1 |

beschreibt einen Drucksensor mit einem Druckkörper, der eine strukturierte amorphe magnetostriktive Metallschicht trägt, sowie ein Sensorteil, das einen Mess- und Referenzkreis aufweist. Bei im Druckkörper auftretenden mechanischen Spannungen erfolgt über die magnetoelastische Kopplung in der Metallschicht eine Änderung der magnetischen Permeabilität, welche über den Messkreis eine Induktivitätsänderung hervorruft und im Vergleich zum Referenzkreis zur Generierung eines dem Druck analogen Spannungssignals herangezogen wird.

Ausgehend von D8 hat sich die Erfindung zur Aufgabe gestellt, eine Belastungsmessanordnung der im Oberbegriff des Anspruchs 1 angegebenen Art so auszubilden, dass sie einen geringeren Hysterese-Effekt und dadurch weniger Messfehler aufweist.

Zum Lösen dieser Aufgabe schafft die Erfindung eine Belastungsmessanordnung nach Anspruch 1. Ein Herstellverfahren zur Herstellung einer solchen Belastungsmessanordnung sowie ein Belastungsmessverfahren sind Gegenstand der weiteren unabhängigen Ansprüche.

Vorteilhafte Ausgestaltungen sind Gegenstand der Unteransprüche.

Die Erfindung schafft eine Belastungsmessanordnung umfassend ein Testobjekt und eine Belastungsmessvorrichtung zur Messung einer Belastung an dem Testobjekt, wobei die Belastungsmessvorrichtung eine Magnetfelderzeugungseinrichtung zum aktiven Erzeugen eines Magnetfelds an einem Messbereich des Testobjekt und eine erste und eine zweite Magnetfelderfassungseinrichtung zum Erfassen eines sich aufgrund der Belastung ändernden Magnetfeldparameters aufweist, wobei der Messbereich eine Schicht aus einem ferromagnetischen amorphen oder nanokristallinen Metall mit einer maximalen Korngröße kleiner als 1 µm aufweist.

Erfindungsgemäß ist vorgesehen, dass das Testobjekt einen Körper aus einem nicht-ferromagnetischen Material enthält, der zumindest an dem Messbereich eine Beschichtung aus dem ferromagnetischen amorphen oder nanokristallinen Metall aufweist.

Durch die Schicht amorphes oder nanokristallines Metall können besonders vorteilhaft Belastungen, wie Drehmoment oder Kraft, unter Verwendung des Villari-Effekts (invers magnetostriktiver Effekt) in Testobjekten gemessen werden, die hauptsächlich aus nicht-ferromagnetischen Materialien gebildet sind. Z.B. kann so berührungslos Drehmoment oder Kraft an Wellen, Streben oder anderen Bauteilen gemessen werden, die z.B. aus Edelstahl, Aluminium, Kunststoffen oder Faserverbundmaterialien gebildet sind.

Metallische Gläser - auch amorphe Metalle genannt - sind Metall- oder Metall- und-Nichtmetall-Legierungen, die auf atomarer Ebene keine kristalline, sondern eine amorphe Struktur aufweisen und trotzdem metallische Leitfähigkeit zeigen. Ein ähnliches oder genauso gutes Verhalten zeigen Metalle, die auf atomarer Ebene nur sehr kleine Kristalle im Nanobereich, kleiner als 1 µm, aufweisen. Derartige Metalle mit Nanokristallen mit einer maximalen Korngröße von kleiner als 1µm (z.B. Durchmesser) werden hier als nanokristalline Metalle bezeichnet. Besonders bevorzugt sind nanokristalline Materialien. Darunter zählt z.B. auch chemisch abgeschiedenes Nickel (mit Glasbildner wie z.B. Phosphor). Chemisch Nickel mit den Phosphorgehalten gemäß der Erfindung ist noch nicht ganz amorph.

Bei der Erfindung werden magnetische amorphe oder nanokristalline Metalle eingesetzt. Vorzugsweise werden weiterhin amorphe oder nanokristalline Legierungen aus wenigstens einem Glasbildner aus der Gruppe, die Bor, Silizium und Phosphor enthält und wenigstens einem Metall aus der Gruppe, die Nickel, Chrom, Eisen und Kobalt enthält, verwendet. Viele dieser metallischen Gläser sind magnetisch, gewöhnlich (insbesondere bei Nicht-Dominanz von Kobalt) weichmagnetisch, d. h. mit niedriger Koerzitivfeldstärke.

Es ist bevorzugt, dass das amorphe oder nanokristalline Metall weiterhin eine Metalllegierung aufweist, die wenigstens ein Metall aus der Gruppe Eisen, Nickel, Kobalt und Molybdän aufweist.

Es ist bevorzugt, dass das amorphe oder nanokristalline Metall weiterhin eine Metalllegierung aufweist, die wenigstens einen Glasbildner aufweist.

Der Glasbildner ist vorzugsweise ein Glasbildner aus der Gruppe Silizium, Bor und Phosphor.

Es ist bevorzugt, dass der Anteil an Glasbildner 2 bis 30 Atom-Prozent beträgt. Bei der Erfindung ist vorgesehen, dass das amorphe oder nanokristalline Metall Chemisch Nickel mit einem Phosphorgehalt von 2 bis 11 Gew.-%, vorzugsweise 5 bis 9%, aufweist oder ist.

Es ist bevorzugt, dass das amorphe oder nanokristalline Metall weiterhin eine Metalllegierung aufweist, die 65 bis 95 Atom-Prozent eines oder mehrerer Metalle aus der Gruppe Eisen, Kobalt und Nickel und 5 bis 35 Atom-Prozent eines oder mehrere Glasbildner aus der Gruppe Silizium, Bor und Phosphor enthält.

Es ist bevorzugt, dass der Körper aus oder mit einem nicht-ferromagnetischen Material aus der Gruppe gebildet ist, die Edelstahl, Aluminium, Kunststoff, faserverstärkter Kunststoff, GFK, CFK umfasst.

Besonders gute Ergebnisse wurden beispielsweise mit einem Sensor erzielt, der eine Belastung an einem Körper, insbesondere Drehmoment an einer Welle, erfasst, wobei der Körper aus chemisch vernickeltem Aluminium gebildet ist.

Es ist bevorzugt, dass die Schicht aus ferromagnetischem amorphen oder nanokristallinen Metall nur partiell an dem Testobjekt vorgesehen ist. Besonders bevorzugt ist dabei, dass die Schicht flächig durchgängig, ohne Unterbrechungen in der Fläche, also ohne Musterung in der Fläche ausgebildet ist, so dass sich eine über die Fläche gleichmäßige Magnetfeldausbreitung ergibt.

Durch die Beschichtung können insbesondere Belastungen an nicht-ferromagnetischen Testobjekten gemessen werden.

Es ist bevorzugt, dass das Testobjekt relativ zu der Belastungsmessvorrichtung um eine Drehachse drehbar ist.

Zum Beispiel kann das Testobjekt eine um eine Drehachse drehende Welle sein, an der ein Drehmoment gemessen werden soll.

Es ist bevorzugt, dass die Magnetfelderzeugungseinrichtung zum aktiven Erzeugen eines radialen Magnetfelds an dem Messbereich des Testobjekts ausgebildet ist. Insbesondere kann die Magnetfelderzeugungseinrichtung ganz einfach an einem Messkopf, der radial zu dem Testobjekt zeigt, integriert werden.

Es ist bevorzugt, dass ein erster Messbereich des Testobjekts eine bezüglich der Drehachse in Umfangsrichtung gleichmäßig durchgängige Schicht aus dem amorphen oder nanokristallinen Metall aufweist. Die Schicht amorphes oder nanokristallines Metall kann beispielsweise an einer Welle um den gesamten Umfang vorgesehen sein.

Es ist bevorzugt, dass an einem zu dem ersten Messbereich in Richtung der Drehachse axial verlagerten zweiten Messbereich eine Schicht aus dem amorphen oder nanokristallinen Metall aufweist, die nur auf einem Teil des Umfangs vorgesehen ist und/oder einen sich abhängig von der Umfangsposition ändernden, magnetfeldbeeinflussenden Materialparameter aufweist.

Durch einen nur partiellen Auftrag des amorphen oder nanokristallinen Metalls an einem Umfangsbereich des Testobjekts kann eine Winkelabhängigkeit eines durch die Magnetfelderzeugungseinrichtung oder eine weitere Magnetfelderzeugungseinrichtung bei Relativdrehung von Testobjekt und Belastungsmessvorrichtung in das Testobjekt induzierten Magnetfelds erzeugt werden. Diese Winkelabhängigkeit kann mit einer der Magnetfelderfassungseinrichtungen oder mit einer zusätzlich vorgesehenen Spule oder dergleichen gemessen werden. So kann ein Kombinationssensor, der eine Belastung und eine Drehzahl oder gegebenenfalls auch einen Drehwinkel misst, geschaffen werden.

Anstelle einer partiellen Beschichtung am Umfang kann die Schicht in dem zweiten Messbereich auch mit einem sich abhängig von dem Umfang ändernden magnetfeldbeeinflussenden Materialparameter aufgetragen werden. Der Materialparameter kann z.B. eine Schichtdicke oder Schichtbreite oder eine Materialzusammensetzung sein.

Es ist bevorzugt, dass die Belastungsmessvorrichtung einen Sensorkopf aufweist.

Es ist bevorzugt, dass der Sensorkopf eine Magnetfelderzeugungsspule, eine erste Magnetfeldmessspule und eine zweite Magnetfeldmessspule in einer V-Anordnung aufweist.

Es ist bevorzugt, dass der Sensorkopf eine Magnetfelderzeugungsspule und eine erste bis vierte Magnetfeldmessspule in einer X-Anordnung aufweist.

Gemäß einem weiteren Aspekt schafft die Erfindung ein Herstellverfahren zum Herstellen einer Belastungsmessanordnung nach einer der voranstehenden Ausgestaltungen mit den Schritten:
a) Bereitstellen des Testobjekts,
c) Bereitstellen der Belastungsmessvorrichtung, und
d) Anordnen der Belastungsmessvorrichtung an dem Messbereich.

Es ist bevorzugt, dass Schritt a) weiterhin umfasst:
a1) vorzugsweise chemisches oder galvanisches Abscheiden einer Legierung aus wenigstens einem Glasbildner und wenigstens einem Metall mit ferromagnetischen Eigenschaften auf dem Testobjekt, wobei das Abscheiden so schnell erfolgt, dass ein amorphes oder nanokristallines Metall mit maximaler Korngröße kleiner als 1 µm entsteht.

Schritt a) umfasst:
Abscheiden von Chemisch Nickel mit einem Phosphorgehalt von 2 bis 12 Gew.-%, vorzugsweise 5 bis 9 Gew.-%.

Chemisch Nickel ist eine chemische Beschichtung. Sie kann als Verschleiß- oder Korrosionsschutz abgeschieden werden. Dabei entstehen Chemisch-Nickel-Schichten. Der Unterschied zum galvanisch Nickel liegt unter anderem darin, dass zur Abscheidung kein äußerer elektrischer Strom, etwa aus einem Gleichrichter, verwendet wird, sondern die zur Abscheidung (Reduktion) der Nickelionen notwendigen Elektronen mittels chemischer Oxidationsreaktion im Bad selbst erzeugt werden. Dadurch erhält man beim chemischen Vernickeln konturentreue Beschichtungen, deren Maße bei einer Toleranz von ± 2 µm bis ± 3 µm im Bereich von 8 µm bis 80 µm liegen können. Vorzugsweise erfolgt die Abscheidung bei Temperaturen unterhalb von 200°, mehr insbesondere kleiner 150°, ganz insbesondere im Bereich von 90°. Es muss somit keine schnelle Abkühlung erfolgen.

Aufgrund der außenstromlosen Abscheidung ist es möglich, auch elektrisch nicht leitfähige Körper, z. B. aus Kunststoffen wie Polyamid, zu beschichten.

Es ist bevorzugt, dass Schritt a) weiterhin umfasst:
a2) Beschichten mit einer Schichtdicke größer als 10 µm, insbesondere zwischen 10 µm und 500 µm.

Es ist bevorzugt, dass Schritt a) weiterhin umfasst:
a3) Beschichten eines bezüglich einer Achse des Testobjekts umlaufenden Umfangsbereich des Testobjekts.

Es ist bevorzugt, dass Schritt a) weiterhin umfasst:
a3) partielles Beschichten eines bezüglich einer Achse des Testobjekts umlaufenden Umfangsbereichs des Testobjekts.

Es ist bevorzugt, dass Schritt a) weiterhin umfasst:
a5) Erzeugen einer Umfangspositionssignatur an einer Umfangsstelle an dem Testobjekt durch partiellen Auftrag der Beschichtung, durch Strukturierung der Beschichtung oder durch Erzeugen der Beschichtung mit einem an dieser Umfangsstelle geänderten magnetfeldbeeinflussenden Materialparameter.

Es ist bevorzugt, dass Schritt a) weiterhin umfasst:
a6) Erzeugen einer flächig durchgängigen Schicht ohne Unterbrechungen.

Es ist bevorzugt, dass Schritt a) weiterhin umfasst:
a7) Abscheiden eines metallischen Glases.

Es ist bevorzugt, dass Schritt a) weiterhin umfasst:
a8) Abscheiden einer Legierung, die wenigstens ein Metall aus der Gruppe Eisen, Nickel, Kobalt und Molybdän aufweist.

Es ist bevorzugt, dass Schritt a) weiterhin umfasst:
a9) Abscheiden einer Legierung, die wenigstens einen Glasbildner aufweist.

Es ist bevorzugt, dass Schritt a) weiterhin umfasst:
a10) Abscheiden einer Legierung, die wenigstens einen Glasbildner aus der Gruppe Silizium, Bor und Phosphor aufweist.

Es ist bevorzugt, dass Schritt a) weiterhin umfasst:
a11) Abscheiden einer Legierung, die 2 bis 30 Atom-Prozent wenigstens eines Glasbildners, insbesondere aus der Gruppe Silizium, Bor und Phosphor, aufweist.

Es ist bevorzugt, dass Schritt a) weiterhin umfasst:
a12) Abscheiden einer Legierung, die 65 bis 95 Atom-Prozent eines oder mehrerer Metalle aus der Gruppe Eisen, Kobalt und Nickel und 5 bis 35 Atom-Prozent eines oder mehrere Glasbildner aus der Gruppe Silizium, Bor und Phosphor enthält. Selbstverständlich können weitere Legierungszusätze vorgesehen sein.

Gemäß einem weiteren Aspekt betrifft die Erfindung ein Belastungsmessverfahren zum Messen einer Belastung an dem mit dem Körper aus nicht-ferromagnetischen Material versehenen Testobjekt, umfassend:
aktives Erzeugen eines Magnetfelds in dem Messbereich, und
Erfassen einer Änderung eines Magnetfeldparameters aufgrund einer Belastung an dem Testobjekt. Erfindungsgemäß wird das Belastungsmessverfahren mit einer Belastungsmessanordnung nach einer der voranstehenden Ausgestaltungen durchgeführt.

Bevorzugte Ausgestaltungen der Erfindung betreffen die Idee einer Metglas-Beschichtung (Metglas - metallisches Glas, d.h. amorphes Metall) oder einer nanokristallinen Metall-Beschichtung zur Drehmomentmessung und Kombination von Sensoren.

Für die Drehmomentmessung mit aktiven magnetisch induktiven Sensoren müssen derzeit zwangsläufig für die Testobjekte Materialien verwendet werden, die ferromagnetisch sind. Nicht-ferromagnetische Materialien wie Edelstähle, Aluminium, Kunststoff, GFK-Verbindungen können nicht eingesetzt werden.

Bevorzugte Ausgestaltungen der Erfindung sehen vor, auf diesen Substraten eine Schicht abzuscheiden, die ferromagnetische Eigenschaften besitzt. Metglas-Abscheidungen sowie nanokristalline Metallabscheidungen aus Nickel zeigen derartige Eigenschaften. Durch den Einsatz von anderen als ferromagnetische Werkstoffe können z.B. Gewichtsreduzierungen der eingesetzten Werkstücke erlaubt werden, oder die z.B. als Wellen ausgeführten Testobjekte können z.B. durch Spritzgussverfahren hergestellt werden.

So können Wellen oder auch andere Testobjekte, wie z.B. Streben, Getriebeelemente, Kettenblätter, usw. aus anderen Materialien können günstiger hergestellt werden und es können andere Dimensionen realisiert werden.

Es ist auch möglich, das Metglas bzw. nanokristalline Metall nur partiell auf das Testobjekt, z.B. eine Welle, aufzubringen. So kann z.B. an einer Stelle mit Metglas/Nanokristallinen Metall eine Drehmomentmessung realisieren und an einer anderen Stelle auf der Welle zusätzlich mit Metglas/Nanokristallinem Metall noch eine Signatur für eine Winkelmessung aufbringen. Bei Ausgestaltungen der Erfindung kann diese Strukturierung der Welle entweder durch nachfolgendes Abtragen von Material gemacht werden, oder der Auftrag von Metglas/Nanokristallines Metall erfolgt z.B. nur an dedizierten Stellen.

Eine bevorzugte Ausgestaltung der Erfindung sieht eine mit Metglas/Nanokristallinem Metall beschichtete Welle für Drehmomentmessungen vor.

Es wird die Messung von Drehmoment an nicht-magnetischen Wellen ermöglicht, indem sie mit ferromagnetischem, metallischem Glas (Met-Glass) oder nanokristallinem Metall beschichtet werden.

Als Testobjektmaterial, z.B. Wellenmaterial kann jedes nicht-ferromagnetische Material dienen, dass mit einer gut haftenden ferromagnetischen Met-Glass/Nanokristall-Metall Beschichtung versehen werden kann. Vorzugsweise ist vorzusehen, dass die Beschichtung durch die Kraftanwendung nicht zerstört wird.

Die Schicht amorphes oder nanokristallines Metall kann z.B. außen aufgetragen werden. Da derartige Schichten härter und korrosionsbeständiger als andere Metalle sind, sind sie als Außenmaterial gut geeignet. Die Schicht kann aber auch eine Schicht unter einer oder mehreren Deckschichten sein.

Im Folgenden werden bevorzugte Eigenschaften des abgeschiedenen Materials erläutert.

Vorzugsweise wird die Schicht durch Abscheiden aufgetragen. Das abgeschiedene Material soll ferromagnetisch und amorph oder nanokristallin sein (z.B. Metallisches Glas). Man erhält entsprechende Beschichtungen durch schnelles Abscheiden von Chemisch Nickel mit einem Phosphorgehalt von 5-9 Gew.-%, welches nur eine sehr moderate Wärmebehandlung erfährt - eine solche Beschichtung ist noch nicht ganz amorph, sondern kann noch Kristalle mit Korngrößen unterhalb von 1 µm aufweisen.

Vorzugsweise ist eine homogene geschlossene Schicht vorgesehen.

Vorteilhaft ist die gute mechanische Verbindung zum Basissubstrat.

Typische Schichtdicken von > 10µm, 30µm und 40µm haben sich in Versuchen als gut geeignet dargestellt.

Gemäß einem bevorzugten Ausführungsbeispiel ist die Belastungsmessanordnung eine Kombination aus einem drehenden Testobjekt, wie z.B. einer Welle, einem Rad, einem Zahnrad, einem Kettenblatt oder dergleichen und einem Drehmomentsensor zum Messen eines Drehmoments an dem Testobjekt. Diese Ausführungsform kann z.B. an einem E-Bike eingesetzt werden, wobei das Drehmoment an der Tretkurbel oder einem damit versehenen Element gemessen werden kann. Dabei kann z.B. CFK mit einer Schicht Metglas oder nanokristallinem Metall verwendet werden.

Bei einem weiteren bevorzugten Ausführungsbeispiel ist die Belastungsmessanordnung ein Drucksensor, mit wenigstens einer durch einen zu messenden Druck zu beaufschlagenden Membran als Testobjekt und einer magnetoelastischen Spannungserfassungseinrichtung als Belastungsmessvorrichtung zum magnetoelastischen Erfassen einer durch die Druckbeaufschlagung bedingten mechanischen Spannung. Hier kann die Membran z.B. aus Edelstahl ausgebildet sein und mit Metglas oder nanokristallinem Metall beschichtet sein. Edelstahl weist hervorragende Eigenschaften zur Verwendung als Membran, insbesondere Korrosionsbeständigkeit und elastisches Verhalten, auf.

Ausführungsbeispiele werden im Folgenden anhand der beigefügten Zeichnungen näher erläutert. Darin zeigt:
- Fig. 1: eine erste bevorzugte Ausführungsform eines Sensorkopfes einer Belastungsmessvorrichtung zum Messen einer mechanischen Belastung, wie insbesondere Kraft, Spannung oder Drehmoment an einem Testobjekt;
- Fig. 2: eine zweite bevorzugte Ausführungsform des Sensorkopfes;
- Fig. 3: eine Seitenansicht des Sensorkopfes von Fig. 1 zusammen mit dem Testobjekt;
- Fig. 4: eine Ansicht vergleichbar Fig. 3 einer weiteren Ausführungsform des Sensorkopfes;
- Fig. 5: eine Ansicht vergleichbar Fig. 3 noch einer weiteren Ausführungsform des Sensorkopfes;
- Fig. 6: eine schematische Ansicht eines Schritts einer Beschichtung des Testobjekts mit einem metallischen Glas;
- Fig. 7: eine schematische Ansicht einer Ausgestaltung des Testobjekts mit einem ersten und einem zweiten Messbereich;
- Fig. 8: eine schematische Ansicht einer weiteren Ausgestaltung des Testobjekts mit einem ersten und einem zweiten Messbereich;
- Fig. 9: eine schematische Ansicht einer Belastungsmessanordnung, bei der das Testobjekt gemäß Fig. 7 oder Fig. 8 eingesetzt ist;
- Fig. 10: eine schematische Ansicht eines Drucksensors als weiteres Ausführungsbeispiel für die Belastungsmessanordnung; und
- Fig. 11: einen der Sensorköpfe der in dem Drucksensor von Fig. 10 eingesetzten Belastungsmessvorrichtung.

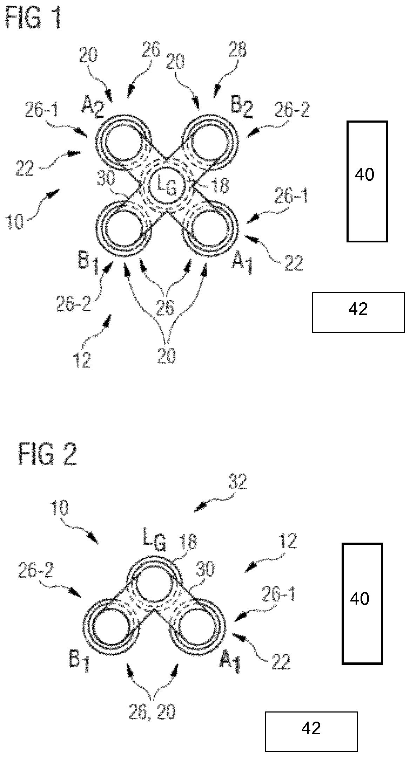

In den Figuren 1 bis 5 sind verschiedene Ausführungsformen von Sensorköpfen 10 für eine Belastungsmessvorrichtung 12 dargestellt. Die Belastungsmessvorrichtung 12 dient zum Messen von mechanischen Belastungen, wie insbesondere Drehmomenten, Kräften oder Spannungen, in einem zumindest teilweise magnetisierbaren, vorzugsweise um eine Drehachse drehbaren, Testobjekt 14, wie z.B. einer Welle, einem Getriebeteil, einer Radnabe, einem Kettenblatt oder dergleichen. Das Testobjekt 14 kann bei anderen Ausgestaltungen auch stationär sein, z.B. ein Träger oder eine Strebe in einer Stützstruktur sein, an denen Belastungen oder Kräfte zu messen sind. Das Testobjekt 14 ist zumindest an einem Messbereich 11 mit einer Schicht 13 aus einem ferromagnetischen metallischen Glas oder aus ferromagnetischem nanokristallinem Metall versehen, die hiernach noch näher erläutert wird. Das Testobjekt 14 und die Belastungsmessvorrichtung 12 bilden zusammen eine Belastungsmessanordnung 16.

Die Belastungsmessvorrichtung 12 weist eine Magnetfelderzeugungseinrichtung 18 und mehrere Magnetfelderfassungseinrichtungen 20, 22 auf.

Bei einer bevorzugten Ausgestaltung weist die Belastungsmessvorrichtung 12 eine Drehwinkelerfassungseinrichtung 40 zum Erfassen eines Drehwinkels des Testobjekts 14 sowie eine Auswerteeinrichtung 42 zur Verringerung einer Beeinflussung der Belastungsmessung durch drehwinkelabhängige Effekte auf. Die Auswerteeinrichtung 42 ist mit der Drehwinkelerfassungseinrichtung 40 und mit den Magnetfelderfassungseinrichtungen 20, 22 verbunden. Die Auswerteeinrichtung 42 ist insbesondere eingerichtet, die RSN unter Verwendung der Drehwinkelinformation zu verringern.

Die Magnetfelderzeugungseinrichtung 18 weist eine Generatorspule Lg und eine nicht näher dargestellte Treiberschaltung zum Treiben der Generatorspule Lg auf.

Die Magnetfelderfassungseinrichtungen 20, 22 weisen Magnetfeldsensoren 26 in Form von Detektorspulen A1, A2, B1, B2 oder Festkörpermagnetfeldsensoren 27 und eine Auswerteeinrichtung 42 zum Auswerten der Signale der Magnetfeldsensoren 26 auf.

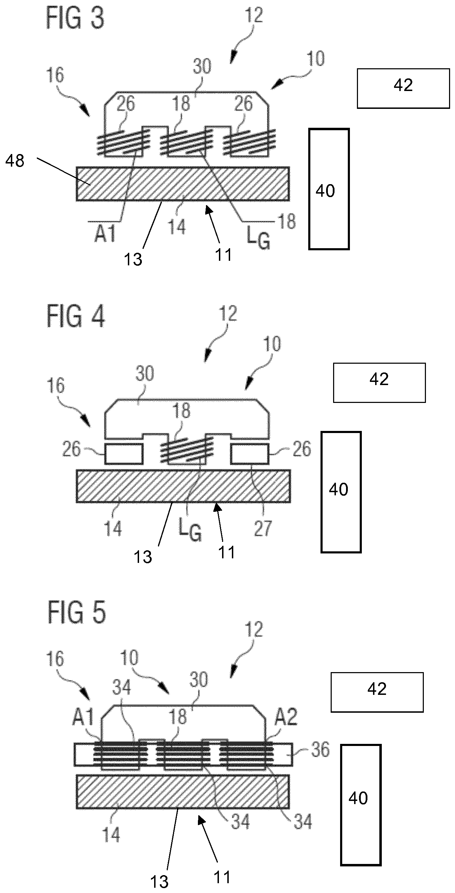

Die in Fig. 1 mit Blick auf die auf das Testobjekt 14 zu richtende Vorderseite gezeigte Ausführungsform des Sensorkopfs 10 ist in Fig. 3 von der Seite gezeigt. Diese Ausführungsform weist zwei als erste Detektorspulen A1, A2 ausgebildete erste Magnetfeldsensoren 26-1 und zwei als zweite Detektorspulen B1, B2 ausgebildete zweite Magnetfeldsensoren 26-2 auf. Die Detektorspulen A1, A2, B1, B2 sind in einer kreuzförmigen Anordnung oder X-Anordnung 28 auf einem gemeinsamen Flusskonzentrator 30 aus ferromagnetischem Material vorgesehen. Dabei ist mittig die Generatorspule Lg - hier ebenfalls auf einem entsprechenden Vorsprung des Flusskonzentrators 30 - vorgesehen, wobei sich die ersten Detektorspulen A1 und A2 gegenüberliegen und sich die zweiten Detektorspulen B1 und B2 gegenüberliegen.

Fig. 2 zeigt eine weitere Ausführungsform des Sensorkopfes 10 mit einer V-Anordnung 32, wo nur ein erster Magnetfeldsensor 26-1 - z.B. die erste Detektorspule A1 - und nur ein zweiter Magnetfeldsensor 26-1 winkelförmig zueinander angeordnet mit der Generatorspule Lg an der Spitze der Winkelform vorgesehen sind.

Wie Fig. 4 zeigt, können anstatt Detektorspulen auch Festkörpermagnetfeldsensoren 27 als erste und zweite Magnetfeldsensoren 26-1, 26-2 vorgesehen sein.

Fig. 5 zeigt eine Ausführungsform des Sensorkopfes 10, bei der die Spulen - Detektorspulen A1, A2, B1, B2 und Generatorspule Lg - als Planarspulen 34 in einem Leiterplattenelement 36 - z.B. ausgeführt als PCB-Platten - vorgesehen sind.

Die Belastungsmessvorrichtung 12 gemäß bevorzugten Ausführungsformen implementiert ein neues Signalverarbeitungskonzept zum Abgreifen und Verarbeiten der Signale der Magnetfeldsensoren 26-1, 26-2.

Das Testobjekt 14 ist mit einer Schicht 13 aus ferromagnetischem amorphen oder nanokristallinen Metall versehen.

Amorphe Metalle werden auch metallische Gläser genannt. Gläser sind feste Materialien ohne Kristallstruktur. Das heißt, die Atome bilden kein Gitter, sondern sind auf den ersten Blick regellos angeordnet: Es besteht keine Fern-, sondern allenfalls eine Nahordnung, diese Struktur bezeichnet man als amorph. Unter nanokristallinem Metall wird ein Metall verstanden, das noch sehr kleine Kristalle, mit maximalen Korngrößen kleiner als 1 µm aufweist. Versuche haben gezeigt, dass nanokristalline Metalle vergleichbare magnetische Eigenschaften wie entsprechende amorphe Metalle zeigen.

Wie alle Gläser entstehen auch amorphe oder nanokristalline Metalle, indem die natürliche Kristallisation ganz oder weitgehend verhindert wird. Dies kann zum Beispiel durch rasches Abkühlen ("Abschrecken") der Schmelze geschehen, so dass den Atomen die Beweglichkeit geraubt wird, bevor sie die Kristallanordnung einnehmen können. Es sind z.B. metallische Gläser und nanokristalline Metalle in Form von Legierungen aus mindestens zwei Metallen bekannt, die amorphisierbar sind. Häufiger sind amorphe oder nanokristalline Legierungen aus nur einem Metall - z. B. Fe - und einem sogenannten Glasbildner - z. B. Bor oder Phosphor, etwa in der Zusammensetzung Fe4B.

Bei einer Ausgestaltung entsteht die Schicht aus amorphem oder nanokristallinem Metall als dünnes Band aus einer Schmelze, die auf einen gekühlten, rotierenden Körper des Testobjekts 14 gegossen wird und dabei schlagartig abkühlt.

In einer weiteren Ausgestaltung wird eine dünne amorphe oder nanokristalline Schicht 13 durch chemische Gasphasenabscheidung oder Sputterdeposition gewonnen. Hierdurch kann auch einfach eine selektive Beschichtung nur eines Teilbereichs des Testobjekts 14 erfolgen.

Die für Metalle sehr ungewöhnliche amorphe oder nanokristalline Atomanordnung hat eine einzigartige Kombination physikalischer Eigenschaften zur Folge: Amorphe und nanokristalline Metalle sind im Allgemeinen härter, korrosionsbeständiger und fester als gewöhnliche Metalle.

Metallische Gläser zeigen u. a. die typische metallische Lichtreflexion und sind für den Laien nicht von gewöhnlichen Metallen zu unterscheiden. Die Oberfläche lässt sich besonders glatt polieren und verkratzt aufgrund der großen Härte auch nicht so leicht, daher lässt sich ein besonders schöner und dauerhafter Glanz erzielen.

Metallische Gläser sind härter als ihre kristallinen Gegenstücke und haben eine hohe Festigkeit. Geringe Verformungen (≈ 1 %) sind rein elastisch. Das heißt, die aufgenommene Energie geht nicht als Verformungsenergie verloren, sondern wird beim Zurückfedern des Materials wieder voll abgegeben.

Die Korrosionsbeständigkeit ist in der Regel höher als bei Metallen vergleichbarer chemischer Zusammensetzung. Dies liegt daran, dass Korrosion meist an Korngrenzen zwischen den Einzelkristalliten eines Metalls angreift, die es bei amorphen Materialien nicht gibt.

In Metallen gehören Bindungselektronen nicht einem, sondern allen Atomen. Derart miteinander gekoppelt, wirken sie aufeinander ein und bilden in ferromagnetischen Materialien spontan magnetisch geordnete Bereiche aus - die Weißschen Bezirke. Als Weiss-Bezirke (auch weisssche Bezirke, nach dem französischen Physiker Pierre-Ernest Weiss) bezeichnet man beim Magnetismus mikroskopisch kleine magnetisierte Domänen in den Kristallen eines ferromagnetischen Stoffes. Die Größe dieser Bezirke erstreckt sich von etwa 10 bis 1000 µm linearer Ausdehnung. Die Richtung der Magnetisierung orientiert sich am Kristallgitter des Werkstoffs. Bei Werkstoffen, deren Korngröße dieser Größenordnung entspricht oder noch darunter liegt, sind alle Kristallite Ein-Domänen-Teilchen, d. h., nicht weiter in Domänen unterteilt. Dies ist bei amorphen Metallen, aber auch bei Metallen mit einer maximalen Korngröße von weniger als 1 µm - den nanokristallinen Metallen der Fall. Amorphe und nanokristalline Metalle sind homogen und ihre magnetischen Eigenschaften sind in allen Richtungen gleich. Die Magnetisierung ist darum wesentlich erleichtert. Dies macht sich insbesondere bei einem erneuten Wechsel der Magnetfeldrichtung bemerkbar. In einem Metall mit Gitterstruktur ist es oft energieaufwändiger, den ursprünglichen Zustand wieder herzustellen, es verbleibt eine Restmagnetisierung (Remanenz). Somit weisen amorphe und nanokristalline Metalle einen weit aus geringeren Hysterese-Effekt auf.

Der Hysterese-Effekt ist insbesondere bei Drehmomentmessungen mit aktiver Magnetisierung problematisch und kann zu Messfehlern führen. Im Stand der Technik auf dem Gebiet der hier interessierenden aktiven Magnetsensoren gab es daher große Anstrengungen, den Hysterese-Effekt zu verringern. Die hier vorliegenden Ausgestaltungen nutzen hierzu den Weg, den Messbereich des Testobjekts mit einer Schicht aus amorphen oder nanokristallinen Metallen zu versehen.

Die Herstellung nanokristalliner Materialien erfolgt durch Abscheidung von chemisch Nickel.

Der Herstellprozess amorpher und kristalliner metallischer Glasbänder hat einige hervorragende Eigenschaften zur Folge. Die einzelnen Elementarmagnete im Material sind zum Teil durch die nichtleitenden glasbildenden Elemente gegeneinander isoliert, so dass der spezifische Widerstand des Werkstoffes mit etwa 120 bis 150 µΩ·cm etwa dreifach höher als von Elektroblech ist. Außerdem sind sie sehr klein, bei kristallinen metallischen Glasbändern liegen sie etwa um 10 nm. Dadurch sind die Wirbelstromverluste, auch bei höheren Frequenzen, geringer als bei anderen kristallinen Legierungen.

Bei den Ausgestaltungen der Erfindung werden magnetische amorphe oder nanokristalline Metalle für die Schicht 13 verwendet. Dadurch lässt sich eine Beschichtung mit einem der besten kommerziell verfügbaren weichmagnetischen Werkstoffen erzielen. Hierdurch lässt sich eine Schicht mit hervorragenden ferromagnetischen Eigenschaften erzielen, so dass die Belastungsmessung auch mit geringen Feldstärken sehr genau erfolgen kann.

Amorphe oder nanokristalline Legierungen aus den Glas-Bildnern Bor, Silizium und Phosphor und den Metallen Eisen, Kobalt und/oder Nickel sind magnetisch, und zwar gewöhnlich (d. h. bei Nicht-Dominanz von Kobalt) weichmagnetisch, d. h. mit niedriger Koerzitivfeldstärke, und haben gleichzeitig einen hohen elektrischen Widerstand. Gewöhnlich ist die Leitfähigkeit zwar metallisch, aber von derselben Größenordnung wie bei geschmolzenen Metallen eben über dem Schmelzpunkt. Dies führt zu niedrigen elektrischen Wirbelstrom-Verlusten. Herkömmliche Metalle ziehen sich typischerweise beim Erstarren schlagartig zusammen. Da die Erstarrung als Glas kein Phasenübergang erster Ordnung ist, findet dieser Volumensprung hier nicht statt. Wenn die Schmelze eines metallischen Glases eine Form ausfüllt, so behält sie diese beim Erstarren. Dies ist ein Verhalten, das man zum Beispiel von Polymeren kennt und das dort große Vorteile bei der Verarbeitung (z. B. Spritzguss) bietet. Daher lassen sich unterschiedliche Materialien gut beschichten, und die Schicht 13 ist dennoch sehr langlebig und hat geringe Auswirkungen auf die gewünschten mechanischen Eigenschaften des für das Testobjekt 14 gewählten Materials.

Bei Ausgestaltungen der Erfindung wird die Schicht 13 aus amorphem oder nanokristallinem Metall hergestellt. Erfindungsgemäß ist die Schicht 13 amorph oder nanokristallin mit einer Korngröße von <1 µm bis hin zu amorphen Legierungen. Vorzugsweise werden zur Herstellung Legierungen zum Ausbilden von ferromagnetischen metallischen Gläsern, z.B. in der Zusammensetzung (Fe, Ni, Co) 70-85 (Si, B)15-30 verwendet. Die Zusammensetzung ist als chemische Formel zu lesen; sprich 70-85 Atomprozent einer beliebigen Mischung aus Eisen, Kobalt und Nickel mit 15-30 Atomprozent einer beliebigen Mischung aus Bor uns Silizium. Eine solche Legierung wird durch sehr schnelles Abschrecken amorph oder nanokristallin; alternativ wird die Schicht zunächst amorph hergestellt und dann erwärmt, um Nanokristalle auszubilden.

Bei einem anderen Ausführungsbeispiel wird (Fe0.68Dy0.07B0.2Si0.05)96Nb4 verwendet, bei dem der Eisengehalt <70 Atomprozent ist.

Weitere mögliche, auch kommerziell erhältliche Materialien sind z.B.:
- Fe78B13Si9 (Metglas 2605 SA1)
- Fe81 B13,5Si3,5C2 (Metglas 2605 SC)
- Fe66Co18B15Si1 (Metglas 2605 CO)
- Co69Fe4Ni1Mo2Si12B12 (Metglas 2705 M)
- Co66Fe4B14Si15Ni1 (Metglas 2714 A)
- Fe40Ni38B18Mo4 (Metglas 2826 MB)
- Co66Fe4B12Si16Mo2 (Vitrovac 6025)
- Co70(FeMo)2Mn5(Sib)23 (Vitrovac 6030)

Bevorzugt enthält das Material der Schicht 13 Glasbildner, insbesondere Si, B und/oder P. Entsprechend enthalten auch in Ausführungsbeispielen verwendete nanokristalline, ferromagnetische Materialien vorzugsweise Glasbildner. Als konkretes Beispiel wäre z.B.: Fe91Zr7B3 zu nennen, das eine typische Korngröße von 17 nm aufweist. Vorzugsweise enthält die Legierung atomaren Anteile an Si, B, und P im Bereich von 2...30 Atomprozent.

Bei einer Ausgestaltung der entsprechenden Materialien werden die zuvor genannten Legierungen durch zur Herstellung metallischer Gläser bekannte Verfahren auf den Messbereich aufgebracht.

Wie oben erläutert, lassen sich Schichten 13 aus metallischem Glas auf unterschiedliche Art und Weise auf einem Körper 48 des Testobjekts 14 aufbringen, wobei der Körper 48 aus ganz unterschiedlichen, insbesondere nichtferromagnetischen Materialien gebildet sein kann.

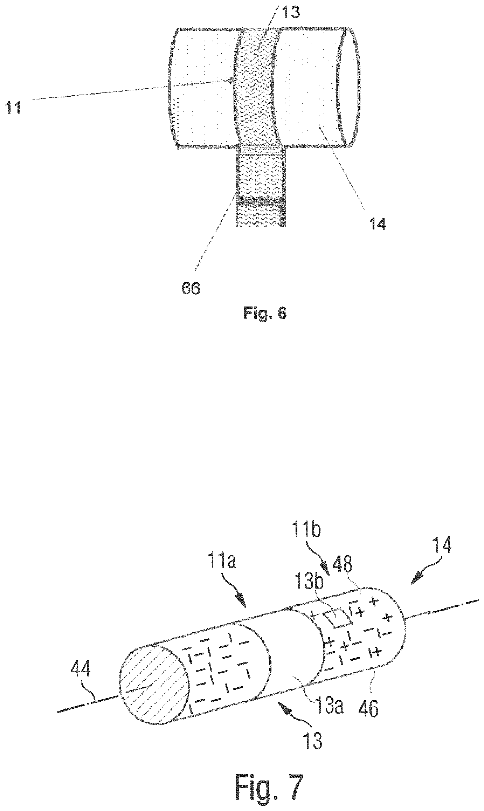

In Fig. 6 ist ein derzeit bevorzugtes Ausführungsbeispiel für einen Verfahrensschritt zum Herstellen des mit der Schicht 13 versehenen Testobjekts 14 erläutert.

Hier wird ein Bad 66 zum selektiven Beschichten eines Körpers 48 des Testobjekts 14 vorgesehen. Das Bad 66 ist derart ausgestaltet, dass nur der zu beschichtende Teilbereich, z.B. der Messbereich 11, durch das Bad 66 benetzt wird. Das Bad 66 ist zum Abscheiden von Chemisch Nickel ausgebildet. Chemisch Nickel, insbesondere mit einem Phosphorgehalt von 5 bis 9 Gew.-%, wird auf dem Körper 48 so abgeschieden, dass amorphes Metall als Schicht 13 gebildet wird. Solche ein selektives Beschichten mit Chemisch Nickel wird von unterschiedlichen Dienstleistern auf dem Markt angeboten.

Bei einer nicht näher dargestellten Ausgestaltung wird der Körper 48 des Testobjekts vollständig in ein entsprechend größeres Bad 66 eingetaucht. Hierdurch wird die gesamte Oberfläche des Körpers 48 mit der Schicht 13 aus amorphen Chemisch Nickel versehen.

In beiden Fällen erfolgt anschließend keine oder allenfalls eine sehr moderate Wärmebehandlung.

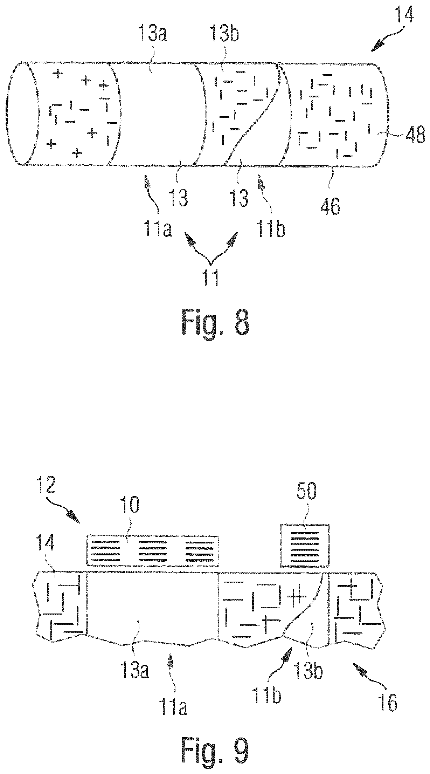

Wie in Fig. 7 und 8 gezeigt, kann das Testobjekt 14 zum Beispiel eine um eine Drehachse 44 drehbare Welle 46 sein.

An dem relativ zu der Belastungsmessvorrichtung 12 um die Drehachse 44 drehbaren Testobjekt 14 ist ein erster Messbereich 11a mit einer ersten Schicht 13a aus amorphen oder nanokristallinem Metall versehen. Die erste Schicht 13a erstreckt sich umlaufend über den gesamten Umfangsbereich um das Testobjekt 14 und ist um den gesamten Umfangsbereich gleichmäßig vorgesehen.

An einem bezüglich der Drehachse 44 axial zu dem ersten Messbereich 11a versetzten zweiten Messbereich 11b ist eine zweite Schicht 13b aus amorphen oder nanokristallinen Metall vorgesehen, die nur partiell an einem Umfangsbereich vorgesehen ist, wie dies in Fig. 7 dargestellt ist, oder derart vorgesehen ist, dass sich ein magnetfeldbeeinflussender Parameter der Schicht 13b abhängig von der Umfangsposition ändert. Zum Beispiel ändert sich die Breite der Schicht abhängig von der Umfangsposition, wie dies in Fig. 8 dargestellt ist.

Das Testobjekt 14 weist einen Körper 48 auf, auf dem die Schicht 13, 13a, 13b angebracht ist. Der Körper 48 ist aus nichtferromagnetischem Material, wie z.B. Aluminium, Edelstahl oder wie dargestellt einem Faserverbundmaterial, z.B. GFK oder CFK hergestellt.

In Fig. 9 ist die Belastungsmessanordnung 16 mit dem Testobjekt 14 gemäß einer der Fig. 7 oder 8 dargestellt.

Die Belastungsmessvorrichtung 12 kann einen der zuvor anhand der Fig. 1 bis 5 erläuterten Sensorköpfe 10 und wenigstens eine weitere Spule 50 aufweisen. In einer Ausgestaltung sind mehrere weitere Spulen 50 um das Testobjekt 14 herum vorgesehen. Durch die weitere Spule 50 wird ein Strom geleitet, und es wird die Impedanz der weiteren oder jeder weiteren Spule 50 erfasst. Bewegt sich ein die partiell vorgesehene zweite Schicht 13b der Fig. 7 an der weiteren Spule 50 vorbei, dann ändert sich die Impedanz der Spule 50. Die Impedanz der weiteren Spule 50 ist abhängig von einer Überdeckung der Spule mit der Schicht 13b aus amorphem oder nanokristallinem Metall.

Entsprechend ändert sich bei einer Verwendung des Testobjekts 14 von Fig. 8 die Impedanz der jeweiligen weiteren Spule 50 je nach Breite des aktuell an der Spule 50 befindlichen Bereichs der Schicht 13b. Somit kann eine Drehzahlinformation oder eine Winkelinformation erhalten werden.

Mittels der Drehzahlinformation oder der Winkelinformation und dem Drehmoment kann z.B. unmittelbar die mechanische Leistung erfasst werden.

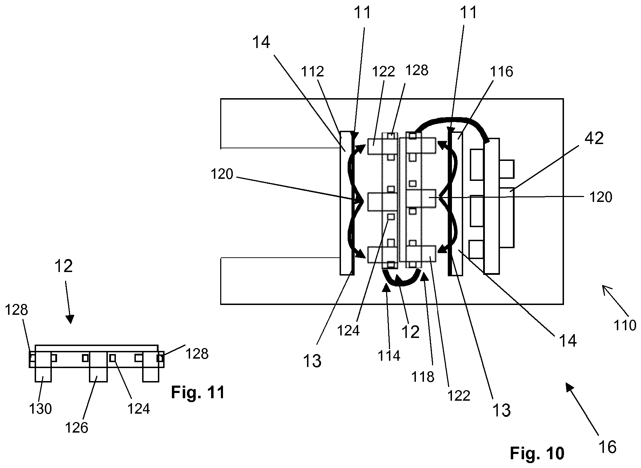

Der Sensorkopf 10 und die wenigstens eine weitere Spule 50 können an einer gemeinsamen Halterung 52 der Belastungsmessvorrichtung 12 gehalten sein. Bei den in den Fig. 1 bis 9 gezeigten Ausgestaltungen ist ein sich drehendes Testobjekt 14 vorgesehen. Das Testobjekt 14 kann aber ein beliebiges Testobjekt 14 sein, an welchem Belastungen zu messen sind. Beispielsweise könnte das Testobjekt 14 auch eine Membran 112 eines Drucksensors 110 sein, wie er in Fig. 10 gezeigt ist. Der Drucksensor 110 ist somit ein weiteres Ausführungsbeispiel für die Belastungsmessanordnung 16.

In den Figuren 10 und 11 ist eine Ausführungsform eines Drucksensors 110 dargestellt, der wenigstens eine durch einen Druck zu beaufschlagende Membran, hier in Form einer ersten Membran 112, und eine magnetoelastische Spannungserfassungseinrichtung, hier in Form einer ersten magnetoelastischen Spannungserfassungseinrichtung 114, zum magnetoelastischen Erfassen einer durch die Druckbeaufschlagung bedingten mechanischen Spannung aufweist. Bei den dargestellten Ausgestaltungen ist eine magnetoelastische Spannungserfassungseinrichtung vorgesehen, die mit einer aktiven Aufmagnetisierung arbeitet.

Bei den dargestellten Ausführungsformen ist die mit Druck zu beaufschlagende Membran eine erste Membran 112, wobei durch die Druckbeaufschlagung der ersten Membran 112 verursachte mechanische Spannungen durch eine erste magnetoelastische Spannungserfassungseinrichtung 114 erfasst werden.

Bei bevorzugten Ausgestaltungen ist weiter eine zweite Membran 116 vorgesehen, wobei eine zweite magnetoelastische Spannungserfassungseinrichtung 118 der zweiten Membran 116 in analoger Weise zugeordnet ist, wie die erste magnetoelastische Spannungserfassungseinrichtung 114 der ersten Membran 112 zugeordnet ist. Hierdurch lässt sich eine besonders genaue Differenzmessung erzielen.

Bei den dargestellten Ausführungsformen ist die wenigstens eine Membran 112, 116 aus einem Körper 48 gebildet, der zumindest an dem Messbereich 11 mit der Schicht 13 aus ferromagnetischem amorphem oder nanokristallinem Metall versehen ist. Damit ist die Membran 112, 116 an einem Oberflächenbereich aus einem ferromagnetischen Material gebildet und die entsprechend zugeordnete magnetoelastische Spannungserfassungseinrichtung 114, 118 ist dazu ausgebildet, mechanische Spannungen in der zugeordneten Membran 112, 116 magnetoelastisch zu erfassen. Aufgrund der Beschichtung mit dem amorphen oder nanokristallinen Material das Material des Hauptkörpers der Membran 112, 116 entsprechend der gewünschten Eigenschaften des Drucksensors 110 ausgewählt werden. Die Membran 112, 116 könnte z.B. keramisch oder insbesondere aus Edelstahl ausgebildet werden.

Die erste und die zweite magnetoelastische Spannungserfassungseinrichtungen 114, 118 sind analog aufgebaut, wobei deren gemeinsamer Aufbau im Folgenden nur anhand der ersten magnetoelastischen Spannungserfassungseinrichtung 114 anhand Fig. 11 näher erläutert wird.

Die magnetoelastische Spannungserfassungseinrichtung 114, 118 weist wenigstens eine Magnetfelderzeugungseinrichtung 120 zum Erzeugen eines durch den Bereich, an dem Spannungen zu erfassen sind, laufenden Magnetfeldflusses auf. Weiter weist die magnetoelastische Spannungserfassungseinrichtung 114, 118 eine Magnetfeldflusserfassungseinrichtung 122 zum Erfassen eines Magnetfeldflusses in dem Bereich auf, an dem mechanische Spannungen zu erfassen sind.

Mechanische Spannungsänderungen an einer insbesondere aus einem weichmagnetischen Material gebildeten Oberfläche eines Körpers führen aufgrund des magnetoelastischen Effekts zu Permeabilitätsänderungen und so zu Änderungen eines in die Oberfläche induzierten Magnetfeldflusses. Dieser Effekt wird bei dem dargestellten Drucksensor 110 ausgenutzt, um Spannungen in der durch Druck beaufschlagten Membran 112, 116 unmittelbar zu erfassen. Diese Spannungen sind ein Maß für den auf die Membran wirkenden Druck.

Anders als bei Drucksensoren, bei denen eine Auslenkung der Membran gemessen wird, wird bei dem Drucksensor 110 eine Spannung in der Membran gemessen. Die Membran 114, 116 muss sich demnach nicht auslenken, um ein Signal zu erzeugen. Entsprechend kann die Membran 114, 116 auch dick ausgeführt werden. Es kann somit ein Drucksensor 110 mit sehr großem Messbereich geschaffen werden.

Demnach ist die Magnetfelderzeugungseinrichtung 120 dazu ausgebildet, einen Magnetfluss zu erzeugen, der durch den Bereich der zugeordneten Membran 112, 116, an dem Spannungen zu erfassen sind, fließt und die Magnetfeldflusserfassungseinrichtung 122 ist dazu ausgebildet, durch mechanische Spannungen verursachte Änderungen an dem Magnetfeldfluss, wie insbesondere Richtungsänderungen der Magnetflusslinien, zu erfassen.

Die Magnetfelderzeugungseinrichtung 120 weist wenigstens eine Erregerspule 124 und einen Erregerspulenkern 126 auf. Die Magnetfeldflusserfassungseinrichtung 122 weist wenigstens eine Messspule 128 und einen Messspulenkern 130 auf. Die Anordnung kann analog wie bei den in den Fig. 1 bis 5 gezeigten Sensorköpfen sein.

### Bezugszeichenliste:

- 10: Sensorkopf
- 11: Messbereich
- 11a: erster Messbereich
- 11b: zweiter Messbereich
- 12: Belastungsmessvorrichtung
- 13: Schicht aus ferromagnetischem amorphem oder nanokristallinem Metall
- 13a: erste Schicht
- 13b: zweite Schicht
- 14: Testobjekt
- 16: Belastungsmessanordnung
- 18: Magnetfelderzeugungseinrichtung
- 20: erste Magnetfelderfassungseinrichtung
- 22: zweite Magnetfelderfassungseinrichtung
- 26: Magnetfeldsensor
- 26-1: erster Magnetfeldsensor
- 26-2: zweiter Magnetfeldsensor
- 27: Festkörpermagnetfeldsensor
- 28: X-Anordnung
- 30: Flusskonzentrator
- 32: V-Anordnung
- 34: Planarspule
- 36: Leiterplattenelement
- 40: Drehwinkelerfassungseinrichtung
- 42: Auswerteeinrichtung
- 44: Drehachse
- 46: Welle
- 48: Körper
- 110: Drucksensor
- 112: erste Membran
- 114: erste magnetoelastische Spannungserfassungseinrichtung
- 116: zweite Membran
- 118: zweite magnetoelastische Spannungserfassungseinrichtung
- 120: Magnetfelderzeugungseinrichtung
- 122: Magnetfeldflusserfassungseinrichtung
- 124: Erregerspule
- 126: Erregerspulenkern
- 128: Messspule
- 130: Messspulenkern

## Patentansprüche

1. Belastungsmessanordnung (16) umfassend ein Testobjekt (14) und eine Belastungsmessvorrichtung zur Messung einer Belastung an dem Testobjekt (14), wobei die Belastungsmessvorrichtung (12) eine Magnetfelderzeugungseinrichtung (18) zum Erzeugen eines Magnetfelds an einem Messbereich (11) des Testobjekts (14) und eine erste und eine zweite Magnetfelderfassungseinrichtung (20, 22) zum Erfassen eines sich aufgrund der Belastung ändernden Magnetfeldparameters aufweist, wobei der Messbereich (11) eine Schicht (13) aus einem ferromagnetischen amorphen oder nanokristallinen Metall mit maximaler Korngröße kleiner 1 µm aufweist, **dadurch gekennzeichnet, dass** das Testobjekt (14) einen Körper (48) enthält, der aus einem nicht-ferromagnetischen Material gebildet ist, und zumindest an dem Messbereich (11) eine Beschichtung (13) aus dem ferromagnetischen amorphen oder nanokristallinen Metall aufweist, wobei das ferromagnetische amorphe oder nanokristalline Metall Chemisch Nickel mit einem Phosphorgehalt von 2 bis 12 Gew.-%, vorzugsweise 5 bis 9 Gew.-%, aufweist oder ist.

2. Belastungsmessanordnung (16) nach Anspruch 1,
**dadurch gekennzeichnet,**
**dass** der Körper (48) aus einem nicht-ferromagnetischen Material aus der Gruppe gebildet ist, die Edelstahl, Aluminium, Kunststoff, faserverstärkter Kunststoff, GFK, CFK enthält.

3. Belastungsmessanordnung (16) nach einem der voranstehenden Ansprüche, **dadurch gekennzeichnet,**
**dass** das amorphe oder nanokristalline Metall weiterhin
3.1. ein metallisches Glas aufweist und/oder
3.2. eine Metalllegierung aufweist, die wenigstens ein Metall aus der Gruppe Eisen, Nickel, Kobalt und Molybdän aufweist; und/oder
3.3. eine Metalllegierung aufweist, die wenigstens einen Glasbildner aufweist; und/oder
3.4. eine Metalllegierung aufweist, die wenigstens einen Glasbildner aus der Gruppe Silizium, Bor und Phosphor aufweist; und/oder
3.5. eine Metalllegierung aufweist, die 2 bis 30 Atom-Prozent wenigstens eines Glasbildners, insbesondere aus der Gruppe Silizium, Bor und Phosphor, aufweist;
3.7 eine Metalllegierung aufweist, die 65 bis 95 Atom-Prozent eines oder mehrerer Metalle aus der Gruppe Eisen, Kobalt und Nickel und 5 bis 35 Atom-Prozent eines oder mehrere Glasbildner aus der Gruppe Silizium, Bor und Phosphor enthält.

4. Belastungsmessanordnung (16) nach einem der voranstehenden Ansprüche, **dadurch gekennzeichnet**,
4.1 dass die Schicht (13) aus amorphem oder nanokristallinem Metall nur partiell an dem Testobjekt (14) vorgesehen ist und/oder
4.2 dass die Schicht (13) aus amorphem oder nanokristallinem Metall eine flächig durchgängige Schicht ohne Unterbrechungen aufweist, an der sowohl die Magnetfelderzeugungseinrichtung (18) als auch die eine erste und eine zweite Magnetfelderfassungseinrichtung (20, 22) angeordnet ist.

5. Belastungsmessanordnung (16) nach einem der voranstehenden Ansprüche,
**dadurch gekennzeichnet,**
**dass** das Testobjekt (14) relativ zu der Belastungsmessvorrichtung (12) um eine Drehachse (44) drehbar ist.

6. Belastungsmessanordnung (16) nach Anspruch 4 und nach Anspruch 5, **dadurch gekennzeichnet,**
**dass** ein erster Messbereich (11a) des Testobjekts (14) eine bezüglich der Drehachse (44) in Umfangsrichtung gleichmäßig durchgängige Schicht (13a) aus dem amorphen oder nanokristallinen Metall aufweist und an einem zu dem ersten Messbereich (11a) in Richtung der Drehachse (44) axial verlagerten zweiten Messbereich (11b) eine zweite Schicht (13b) aus dem amorphen oder nanokristallinen Metall aufweist, die nur auf einem Teil des Umfangs vorgesehen ist und/oder einen sich abhängig von der Umfangsposition ändernden, magnetfeldbeeinflussenden Materialparameter aufweist.

7. Belastungsmessanordnung (16) nach einem der voranstehenden Ansprüche, **dadurch gekennzeichnet,**
**dass** die Belastungsmessvorrichtung (12) einen Sensorkopf (10) aufweist,
7.1 der eine Magnetfelderzeugungsspule, eine erste Magnetfeldmessspule und eine zweite Magnetfeldmessspule in einer V-Anordnung (32) aufweist, oder
7.2 der eine Magnetfelderzeugungsspule und eine erste bis vierte Magnetfeldmessspule in einer X-Anordnung (28) aufweist.

8. Belastungsmessanordnung (16) nach einem der voranstehenden Ansprüche, **dadurch gekennzeichnet,**
**dass** die Magnetfelderzeugungseinrichtung (18) zum aktiven Erzeugen eines radialen Magnetfelds an dem Messbereich des Testobjekts ausgebildet ist.

9. Belastungsmessanordnung (16) nach einem der Ansprüche 1 bis 3, 7 und 8, **dadurch gekennzeichnet,**
**dass** die Belastungsmessanordnung (16) als Drucksensor (110) mit wenigstens einer Membran (112, 116) als Testobjekt (14) ausgebildet ist.

10. Herstellverfahren zum Herstellen einer Belastungsmessanordnung (16) nach einem der voranstehenden Ansprüche, **gekennzeichnet durch**
a) Bereitstellen des Testobjekts (14),
c) Bereitstellen der Belastungsmessvorrichtung (12), und
d) Anordnen der Belastungsmessvorrichtung (12) an dem Messbereich (11).

11. Herstellverfahren nach Anspruch 10,
**dadurch gekennzeichnet,**
**dass** Schritt a) weiterhin einen oder mehrere der folgenden Schritte umfasst:
a1) Abscheiden, insbesondere galvanisches oder chemisches Abscheiden, einer Legierung aus wenigstens einem Glasbildner und wenigstens einem Metall mit ferromagnetischen Eigenschaften auf dem Testobjekt (14), wobei das Abscheiden so schnell erfolgt, dass ein amorphes oder nanokristallines Metall mit maximaler Korngröße kleiner 1 µm entsteht;
a2) Beschichten mit einer Schichtdicke größer als 10 µm, insbesondere zwischen 10 µm und 500 µm;
a3) Beschichten eines bezüglich einer Achse des Testobjekts (14) umlaufenden Umfangsbereich des Testobjekts (14);
a4) partielles Beschichten eines bezüglich einer Achse des Testobjekts (14) umlaufenden Umfangsbereichs des Testobjekts (14);
a5) Erzeugen einer Umfangspositionssignatur an einer Umfangsstelle an dem Testobjekt (14) durch partiellen Auftrag der Beschichtung (13b), durch Strukturierung der Beschichtung oder durch Erzeugen der Beschichtung (13b) mit einem an dieser Umfangsstelle geänderten magnetfeldbeeinflussenden Materialparameter;
a6) Erzeugen einer flächig durchgängigen Schicht ohne Unterbrechungen;
a7) Abscheiden eines metallischen Glases;
a8) Abscheiden einer Legierung, die wenigstens ein Metall aus der Gruppe Eisen, Nickel, Kobalt und Molybdän aufweist;
a9) Abscheiden einer Legierung, die wenigstens einen Glasbildner aufweist;
a10) Abscheiden einer Legierung, die wenigstens einen Glasbildner aus der Gruppe Silizium, Bor und Phosphor aufweist;
a11) Abscheiden einer Legierung, die 2 bis 30 Atom-Prozent wenigstens eines Glasbildners, insbesondere aus der Gruppe Silizium, Bor und Phosphor, aufweist;
a12) Abscheiden einer Legierung, die 65 bis 95 Atom-Prozent eines oder mehrerer Metalle aus der Gruppe Eisen, Kobalt und Nickel und 5 bis 35 Atom-Prozent eines oder mehrere Glasbildner aus der Gruppe Silizium, Bor und Phosphor enthält.

12. Belastungsmessverfahren, durchgeführt mit einer Belastungsmessanordnung nach einem der Ansprüche 1 bis 9, zum Messen einer Belastung an dem Testobjekt (14), umfassend:
aktives Erzeugen eines Magnetfelds in dem Messbereich (11),
Erfassen einer Änderung eines Magnetfeldparameters aufgrund einer Belastung an dem Testobjekt (14).

13. Belastungsmessverfahren nach Anspruch 12,
**dadurch gekennzeichnet,**
**dass** das Magnetfeld bezüglich einer Drehachse des Testobjekts radial erzeugt wird.

## Claims

1. Load measuring arrangement (16) comprising a test object (14) and a load measuring apparatus for measuring a load at the test object (14), wherein the load measuring apparatus (12) has a magnetic field generating device (18) for generating a magnetic field in a measuring region (11) of the test object (14) and a first and a second magnetic field capturing device (20, 22) for capturing a magnetic field parameter which changes on account of the load, wherein the measuring region (11) has a layer (13) made of a ferromagnetic amorphous or nanocrystalline metal with a maximum particle size less than 1 µm,
**characterized in that**
the test object (14) includes a body (48) that is formed from a non-ferromagnetic material and which has a coating (13) made of the ferromagnetic amorphous or nanocrystalline metal at least in the measuring region (11) and wherein the ferromagnetic amorphous or nanocrystalline metal is electroless nickel or includes electroless nickel with a phosphorus content of 2 to 12% by weight, preferably 5 to 9% by weight.

2. Load measuring arrangement (16) according to claim 1,
**characterized in that**
the body (48) is formed from or with a non-ferromagnetic material from the group including stainless steel, aluminum, plastic, fiber-reinforced plastic, GFRP, CFRP.

3. Load measuring arrangement (16) according to any of the preceding claims, **characterized in that**
the amorphous or nanocrystalline metal further is
3.1 a metallic glass and/or
3.2 a metal alloy including at least one metal from the group of iron, nickel, cobalt and molybdenum; and/or
3.3 a metal alloy including at least one glass former; and/or
3.4 a metal alloy including at least one glass former from the group of silicon, boron and phosphorus; and/or
3.5 a metal alloy including 2 to 30 atomic percent of at least one glass former, particularly from the group of silicon, boron and phosphorus;
3.7 a metal alloy including 65 to 95 atomic percent of one or more metals from the group of iron, cobalt and nickel and 5 to 35 atomic percent of one or more glass formers from the group of silicon, boron and phosphorus.

4. Load measuring arrangement (16) according to any of the preceding claims,
**characterized in that**
4.1 the layer (13) of amorphous or nanocrystalline metal is only partially provided on the test object (14) and/or
4.2 the layer (13) of amorphous or nanocrystalline metal includes a two-dimensionally continuous layer without interruptions where both the magnetic field generating device (18) and the one first and one second magnetic field capturing device (20, 22) are arranged.

5. Load measuring arrangement (16) according to any of the preceding claims,
**characterized in that**
the test object (14) is rotatable about a rotation axis (44) relative to the load measuring device (12).

6. Load measuring arrangement (16) according to claim 4 and claim 5, **characterized in that**
a first measuring region (11a) of the test object (14) has a first layer (13a) of amorphous or nanocrystalline metal which uniformly and continuously extends in the circumferential direction with respect to the rotation axis (44) and a second layer (13b) of said amorphous or nanocrystalline metal in a second measuring region (11b) that is axially displaced to the first measuring region (11a) in the direction of the rotation axis (44), which second layer is only provided on a part of the circumference and/or has a magnetic field-influencing material parameter which changes depending on the circumferential position.

7. Load measuring arrangement (16) according to any of the preceding claims, **characterized in that**
the load measuring apparatus (12) has a sensor head (10) which
7.1 includes a magnetic field generating coil, a first magnetic field measuring coil and a second magnetic field measuring coil in a V-arrangement (32) or
7.2 includes a magnetic field generating coil and a first to fourth magnetic field measuring coil in an X-arrangement (28).

8. Load measuring arrangement (16) according to any of the preceding claims, **characterized in that**
the magnetic field generating device (18) is designed for actively generating a radial magnetic field in the measuring region of the test object.

9. Load measuring arrangement (16) according to claims 1 to 3, 7 and 8, **characterized in that**
the load measuring arrangement (16) is designed as a pressure sensor (110) with at least one membrane (112, 116) as the test object (14).

10. Method for producing a load measuring arrangement (16) according to any of the preceding claims, **characterized by**
a) providing the test object (14),
c) providing the load measuring apparatus (12), and
d) arranging the load measuring apparatus (12) at the measuring region (11).

11. Production method according to claim 10,
**characterized in that**
step a) further comprises one or more of the following steps:
a1) depositing, especially galvanically or chemically, an alloy of at least one glass former and at least one metal having ferromagnetic properties on the test object (14), wherein the deposition takes place so quickly that an amorphous or nanocrystalline metal having a maximum particle size of less than 1 µm is formed;
a2) coating with a layer thickness greater than 10 µm, in particular between 10 µm and 500 µm;
a3) coating a circumferential region of the test object (14) which is all-round with respect to an axis of the test object (14);
a4) partially coating a circumferential region of the test object (14) which is all around with respect to an axis of the test object (14);
a5) producing a circumferential position signature at a circumferential position on the test object (14) by partial application of the coating (13b),
by texturing the coating or by producing the coating (13b) with a magnetic field-influencing material parameter changed at this circumferential position;
a6) producing a two-dimensionally continuous layer without interruptions;
a7) depositing a metallic glass;
a8) depositing an alloy which at least includes one metal from the group of iron, nickel, cobalt and molybdenum;
a9) depositing an alloy which at least includes one glass former;
a10) depositing an alloy which at least includes one glass former from the group of silicon, boron and phosphorus;
a11) depositing an alloy including 2 to 30 atomic percent of at least one glass former, particularly from the group of silicon, boron and phosphorus;
a12) depositing an alloy which contains 65 to 95 atomic percent of one or more metals from the group of iron, cobalt and nickel and 5 to 35 atomic percent of one or more glass formers from the group of silicon, boron and phosphorus.

12. Load measuring method, performed using a load measuring arrangement according to any of claims 1 to 9 for measuring a load at the test object (14), comprising:
actively generating a magnetic field in the measuring region (11),
capturing a change in the magnetic field parameter on account of the load at the test object (14).

13. Load measuring method according to claim 12,
**characterized in that**
the magnetic field is generated radially with respect to an axis of rotation.

## Revendications

1. Ensemble de mesure de charge (16) comprenant un objet de test (14) et un dispositif de mesure de charge pour mesurer une charge sur l'objet de test (14), le dispositif de mesure de charge (12) comprenant un dispositif de génération de champ magnétique (18) pour générer un champ magnétique sur une zone de mesure (11) de l'objet de test (14) et un premier et un deuxième dispositif de détection de champ magnétique (20, 22) pour détecter un paramètre de champ magnétique qui varie en raison de la charge, la zone de mesure (11) présentant une couche (13) d'un métal ferromagnétique amorphe ou nanocristallin avec une taille de grain maximale inférieure à 1 µm,
**caractérisé en ce que**
l'objet de test (14) contient un corps (48) qui est formé d'un matériau non ferromagnétique et présente, au moins sur la zone de mesure (11), un revêtement (13) en un métal ferromagnétique amorphe ou nanocristallin, le métal ferromagnétique amorphe ou nanocristallin présentant ou étant du nickel chimique avec une teneur en phosphore de 2 à 12 % en poids, de préférence de 5 à 9 % en poids.

2. Ensemble de mesure de charge (16) selon la revendication 1,
**caractérisé en ce que**
le corps (48) est formé d'un matériau non ferromagnétique choisi dans le groupe comprenant l'acier inoxydable, l'aluminium, le plastique, le plastique renforcé par des fibres, le GFK, le CFK.

3. Ensemble de mesure de charge (16) selon l'une des revendications précédentes, **caractérisé en ce que**
le métal amorphe ou nanocristallin comprend en outre
3.1 un verre métallique et/ou
3.2 un alliage métallique qui comprend au moins un métal du groupe du fer, du nickel, du cobalt et du molybdène; et/ou
3.3 un alliage métallique qui comprend au moins un agent vitrifiant; et/ou
3.4 un alliage métallique qui comprend au moins un agent vitrifiant du groupe du silicium, du bore et du phosphore; et/ou
3.5 un alliage métallique qui comprend 2 à 30 pour cent atomiques d'au moins un agent vitrifiant, en particulier du groupe silicium, bore et phosphore;
3.7 un alliage métallique qui comprend 65 à 95 pour cent atomique d'un ou plusieurs métaux du groupe fer, cobalt, nickel et 5 à 35 pour cent atomique d'un ou plusieurs agents vitrifiants du groupe silicium, bore et phosphore.

4. Ensemble de mesure de charge (16) selon l'une des revendications précédentes, **caractérisé en ce que**
4.1 la couche (13) de métal amorphe ou nanocristallin n'est prévue que partiellement sur l'objet de test (14) et/ou
4.2 la couche (13) en métal amorphe ou nanocristallin présente une couche continue sur toute la surface sans interruptions, sur laquelle sont disposés aussi bien le dispositif de génération de champ magnétique (18) que le premier et le deuxième dispositif de détection de champ magnétique (20, 22).

5. Ensemble de mesure de charge (16) selon l'une des revendications précédentes,
**caractérisé en ce que**
l'objet de test (14) peut tourner autour d'un axe de rotation (44) par rapport au dispositif de mesure de charge (12).

6. Ensemble de mesure de charge (16) selon la revendication 4 et selon la revendication 5,
**caractérisé en ce que**
une première zone de mesure (11a) de l'objet de test (14) présente une couche (13a) du métal amorphe ou nanocristallin, continue et uniforme dans la direction circonférentielle par rapport à l'axe de rotation (44), et une deuxième zone de mesure (11b) décalée axialement par rapport à la première zone de mesure (11a) dans la direction de l'axe de rotation (44) présente une deuxième couche (13b) du métal amorphe ou nanocristallin, qui n'est prévue que sur une partie de la circonférence et/ou qui présente un paramètre de matériau influençant le champ magnétique qui varie en fonction de la position de la circonférence.

7. Ensemble de mesure de charge (16) selon l'une des revendications précédentes,
**caractérisé en ce que**
le dispositif de mesure de charge (12) comporte une tête de capteur (10),
7.1 qui comprend une bobine de génération de champ magnétique, une première bobine de mesure de champ magnétique et une deuxième bobine de mesure de champ magnétique dans un agencement en V (32) ou
7.2 qui présente une bobine de génération de champ magnétique et une première à une quatrième bobine de mesure de champ magnétique dans un agencement en X (28).

8. Ensemble de mesure de charge (16) selon l'une des revendications précédentes,
**caractérisé en ce que**
le dispositif de génération de champ magnétique (18) est conçu pour générer activement un champ magnétique radial au niveau de la zone de mesure de l'objet de test.

9. Ensemble de mesure de charge (16) selon l'une des revendications 1 à 3, 7 et 8, **caractérisé en ce que**
le dispositif de mesure de charge (16) est conçu comme un capteur de pression (110) avec au moins une membrane (112, 116) comme objet de test (14).

10. Procédé de fabrication d'un dispositif de mesure de charge (16) selon l'une quelconque des revendications précédentes, **caractérisé en ce qu'**il consiste à
a) fournir l'objet de test (14),
b) fournir le dispositif de mesure de charge (12) et
d) mise en place du dispositif de mesure de charge (12) sur la zone de mesure (11).

11. Procédé de fabrication selon la revendication 10,
**caractérisé en ce que**
l'étape a) comprend en outre une ou plusieurs des étapes suivantes:
a1) dépôt, notamment par voie électrolytique ou chimique, d'un alliage d'au moins un agent vitrifiant et d'au moins un métal ayant des propriétés ferromagnétiques sur l'objet de test (14), le dépôt étant effectué suffisamment rapidement pour obtenir un métal amorphe ou nanocristallin ayant une taille de grain maximale inférieure à 1 µm;
a2) revêtement d'une épaisseur supérieure à 10 µm, notamment comprise entre 10 µm et 500 µm;
a3) revêtement d'une zone périphérique de l'objet de test (14) circonférentielle par rapport à un axe de l'objet de test (14);
a4) revêtement partiel d'une zone périphérique de l'objet de test (14) circonférentielle par rapport à l'axe de l'objet de test (14);
a5) création d'une signature de position circonférentielle à un emplacement circonférentiel sur l'objet de test (14) par application partielle de couche (13b), texturation du revêtement ou création de couche (13b) avec un paramètre de matériau influençant le champ magnétique modifié à cet emplacement circonférentiel;
a6) création d'une couche continue sur toute la surface sans interruptions;
a7) dépôt d'un verre métallique;
a8) dépôt d'un alliage comprenant au moins un métal choisi parmi le fer, le nickel, le cobalt et le molybdène;
a9) dépôt d'un alliage comprenant au moins un agent vitrifiant;
a10) dépôt d'un alliage comprenant au moins un agent vitrifiant choisi parmi le silicium, le bore et le phosphore;
a11) dépôt d'un alliage contenant de 2 à 30 pour cent atomiques d'au moins un agent vitrifiant, notamment du groupe du silicium, du bore et du phosphore;
a12) dépôt d'un alliage contenant de 65 à 95 pour cent atomiques d'un ou de plusieurs métaux choisis parmi le fer, le cobalt et le nickel et de 5 à 35 pour cent atomiques d'un ou de plusieurs agents vitrifiants choisis parmi le silicium, le bore et le phosphore.

12. Procédé de mesure de charge mis en oeuvre avec un dispositif de mesure de charge selon l'une quelconque des revendications 1 à 9, pour mesurer une charge sur un objet de test (14), comprenant:
la génération active d'un champ magnétique dans la zone de mesure (11),
la détection d'une variation d'un paramètre de champ magnétique due à une contrainte sur l'objet de test (14).

13. Procédé de mesure de charge selon la revendication 12,
**caractérisé en ce que**
le champ magnétique est généré radialement par rapport à un axe de rotation de l'objet de test.
